## Europäisches Patentamt
## European Patent Office
## Office européen des brevets

(11) Veröffentlichungsnummer: **0 075 667**
**A1**

## (12) EUROPÄISCHE PATENTANMELDUNG

(21) Anmeldenummer: 82106289.0

(22) Anmeldetag: 14.07.82

(51) Int. Cl.³: **F 16 K 31/53**
**F 16 H 1/32**

(30) Priorität: 24.09.81 DE 3138004

(43) Veröffentlichungstag der Anmeldung:
06.04.83 Patentblatt 83/14

(84) Benannte Vertragsstaaten:
FR GB IT NL

(71) Anmelder: ELEKTRO-MECHANIK GMBH
Biggetal 2
D-5963 Wenden(DE)

(72) Erfinder: Weis, Alfred, Ing. grad.
Sebastiansweg 4
D-5960 Olpe/Biggesee(DE)

(74) Vertreter: Lertes, Kurt, Dr.
AEG-TELEFUNKEN AKTIENGESELLSCHAFT
Theodor-Stern-Kai 1
D-6000 Frankfurt/Main 70(DE)

(54) **Stellantrieb mit einem Planetengetriebe.**

(57) Planetengetriebe, das ein außenverzahntes Innenrad (6) aufweist, das durch einen Exzenter angetrieben wird, durch den die Abtriebswelle (1) des Stellantriebs hindurchgeht.

Eine Herabsetzung des Übertragungsverhältnisses wird dadurch erreicht, daß auf einer Seite des Innenrades (6) Rundbolzen (10) auf einen Kreis in gleichem Kreisbogenabstand angeordnet sind und auf der Abtriebswelle (1) eine Lochscheibe (11) befestigt ist, durch deren Löcher die Rundbolzen eingreifen.

Figur 1

ELEKTRO - MECHANIK GMBH
5963 Wenden

FBE 81/14
(EMG 81/4)
30.06.82

## Stellantrieb mit einem Planetengetriebe

Die Erfindung bezieht sich auf einen Stellantrieb für Ventile, Schieber oder dgl. mit einem Planetengetriebe, das die im Oberbegriff des Anspruchs 1 angegebenen Bestandteile und Merkmale dieser Bestandteile aufweist.

Stellantriebe mit einem derartigen, sog. rückkehrenden Planetengetriebe, das zweistufig ausgeführt ist, sind gebräuchlich mit zwei innenverzahnten Außenrädern, deren erstes auch außenverzahnt ist und mit einer im Getriebegehäuse gelagerten Schnecke im Eingriff ist, und deren zweites mit einer auf der Abtriebswelle des Getriebes befestigten Mitnehmerscheibe verbunden ist, ferner mit zwei miteinander verbundenen außenverzahnten Innenrädern, die durch einen Exzenter angetrieben werden.

Ein nach dem gleichen Prinzip konstruiertes Planetengetriebe ist vom Markt her unter der Bezeichnung "The Keystone epi" bekannt. Dieses Planetengetriebe hat ein außenverzahntes Innenrad, das mit einem Wälzlager auf einem Exzenter gelagert ist, und eine Außenverzahnung, bestehend aus zwei Zahnkränzen mit verschieden großen Durchmessern, und hat ebenfalls nur ein innen- und außenverzahntes Außenrad, dessen Außenverzahnung mit einer auf der Welle eines Handantriebs befestigten Schnecke, und dessen Innenverzahnung mit einem der zwei Zahnkränze des Innenrades im Eingriff sind. Der zweite Zahnkranz des Innenrades ist im Eingriff mit der Innenverzahnung einer schalenförmigen Mitnehmerscheibe, die auf der Abtriebswelle des Getriebes befestigt ist und bei der sich die Innenverzahnung an der Innenfläche einer auf der Scheibe senkrechten, zylinderringförmigen Wand befindet.

Bei den vorangehend beschriebenen Planetengetrieben des Standes der Technik sind infolge ihrer Bauart die Innenräder im Durchmesser mehr oder weniger kleiner als die Innenverzahnung der Außenräder.

Bei einstufigen Getrieben ist das Übersetzungsverhältnis ü definiert durch das Verhältnis der Differenz der Anzahl $z_1$ der Zähne der Innenverzahnung des unmittelbar auf die Abtriebswelle wirkenden Außenrades und der Anzahl $z_2$ der Zähne der Außenverzahnung des auf dem Exzenter gelagerten Innenrades zu der Anzahl $z_2$ der Zähne der Außenverzahnung des Innenrades nach der Beziehung

$$\ddot{u} = \frac{n_1}{n_2} = \frac{z_1 - z_2}{z_2}$$

Das oben beschriebene, vom Markt her bekannte zweistufige Getriebe, bei dem das Außenrad an der Drehung gehindert ist, hat nach Dubbel: Taschenbuch für den Maschinenbau, Berlin, Verlag Julius Springer, 1935, Seite 717, ein Übersetzungsverhältnis

$$J = \frac{r_1 \cdot r_3}{r_2 \cdot r_4} - 1$$

mit    $r_1$ = Radius der Innenverzahnung der schalenförmigen Mitnehmerscheibe,

$r_2$ = Radius des größeren Zahnkranzes des Innenrades,

$r_3$ = Radius des kleineren Zahnkranzes des Innenrades,

$r_4$ = Radius der Innenverzahnung des Außenrades.

Das Radienverhältnis $\dfrac{r_1}{r_2}$ und $\dfrac{r_3}{r_4}$ bei je zwei miteinander kämmenden Rädern ist dem Verhältnis $\dfrac{z_1}{z_2}$ bzw. $\dfrac{z_3}{z_4}$ der Anzahl der Zähne der betreffenden Zahnräder gleich, so daß der obigen Beziehung für J = 1/ü die folgende entspricht: $1/\ddot{u} = \dfrac{z_1 \cdot z_3}{z_2 \cdot z_4} - 1$

Bei zweistufigen Getrieben wird vorzugsweise groß festgelegt, z. B. im Bereich 100 1/ü 1000.

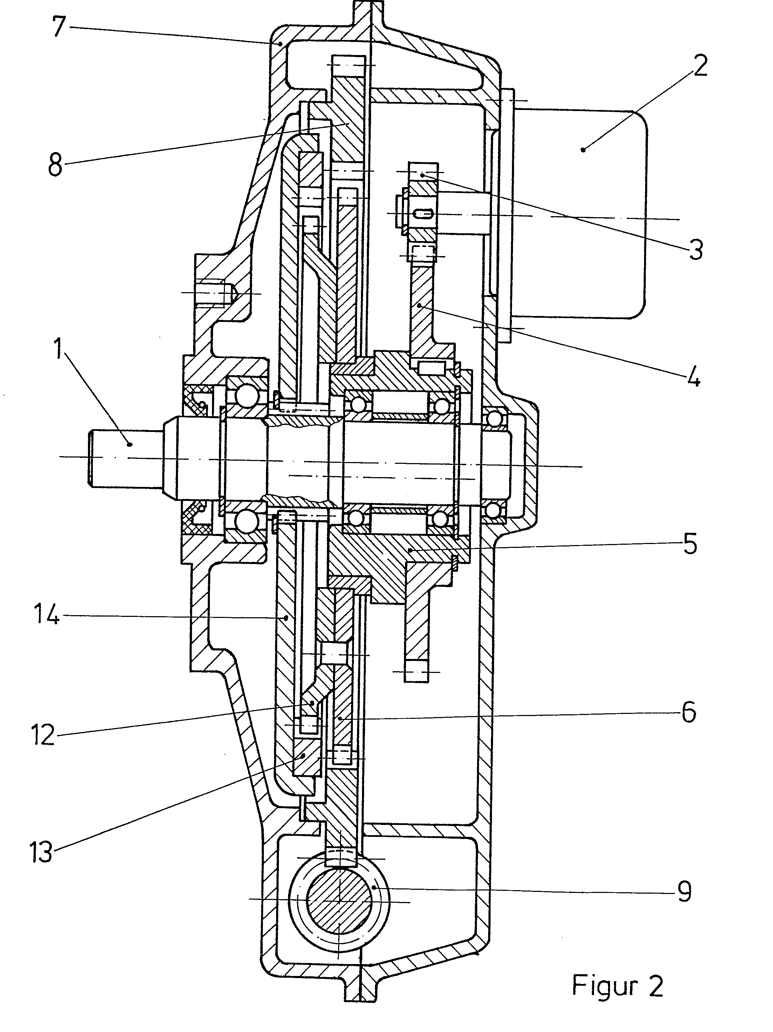

Auch bei einem Planetengetriebe entsprechend dem oben berücksichtigten Stand der Technik, bei dem man sich die zylinderringförmige Wand mit Innenverzahnung der Mitnehmerscheibe als ein zweites Außenrad ersetzend, wie in Figur 2 dargestellt, vorstellen kann, ist das Übersetzungsverhältnis wegen des dort geringen Unterschiedes der Durchmesser der zwei Zahnkränze des außenverzahnten Innenrades groß.

Der Erfindung zugrundeliegend ist die Aufgabe gestellt, ausgehend von einem rückkehrenden Planetengetriebe, zweistufig ausgeführt mit den oben eingangs angegebenen Bestandteilen, ein solches mit einem herabgesetzten Übersetzungsverhältnis unter Verwendung von nach Maßgabe des gewünschten Herabsetzungsgrades ausgebildeten Konstruktionselementen anstelle von vorhandenen Getriebebestandteilen zu schaffen, welche Elemente und Bestandteile unschwierig gegeneinander auswechselbar sind.

Die erfindungsgemäße Lösung dieser Aufgabe ergibt sich nach der im Patentanspruch 1 gekennzeichneten technischen Lehre dadurch, daß bei einem rückkehrenden Planetengetriebe auf einem außenverzahnten Innenrad eine Anzahl Rundbolzen mit gleichem Durchmesser, die auf einem Kreis um das Zentrum des Innenrades stehen, gleiche Bogenlängen weit voneinander beabstandet, befestigt sind und auf diesem in einer Richtung hervorstehen, und daß auf der Abtriebswelle eine Lochscheibe befestigt ist, bei der in einem parallel zum Innenrad ausgerichteten Scheibenteil Kreislöcher in gleicher Anzahl wie die Rundbolzen und mit gleichgroßem Durchmesser, der größer als der Durchmesser der Rundbolzen ist, auf einem Kreis liegend so angeordnet sind, daß die Rundbolzen durch die Kreislöcher hindurchgreifen und den Kreislochrand berühren.

Ein erfindungsgemäß geschaffenes Getriebe ist einstufig, im folgenden wird es "einstufiges Cyclo-Getriebe" genannt. Durch Umkehrung der Auswechslung kann es ebenfalls unschwierig in ein rückkehrendes Planetengetriebe rückgewandelt werden, und darin wird ein Vorteil der Erfindung gesehen.

Ausgehend von einem rückkehrenden Planetengetriebe entsprechend dem vom Markt her bekannten Stand der Technik mit einem Innenrad, dessen Außenverzahnung zwei Zahnkränze hat, müssen nur zwei Bestandteile, nämlich ein Zahnkranz des Innenrades und die erwähnte schalenförmige Mitnehmerscheibe mit der Innenverzahnung durch zwei Konstruktionselemente gemäß der Erfindung ersetzt werden.

Weitere Ausgestaltungen und Ausbildungen der Erfindung ergeben sich aus den Patentansprüchen 2 und 3.

Um mittels eines sogenannten einstufigen Cyclo-Getriebes größere Kräfte und Drehmomente zu übertragen, werden nach Anspruch 2 die kraftübertragenden Zahnräder, und zwar das außenverzahnte Innenrad und das innen- und außenverzahnte Außenrad, ferner die mit dem Innenrad durch Rundbolzen verbundene Lochscheibe bedarfsweise jeweils doppelt oder mehrfach parallel auf gleicher Achse angeordnet.

Einer mehr mittelbaren weiteren Ausgestaltung bzw. Ausbildung der Erfindung entspricht die im Anspruch 3 gegebene technische Lehre, nach der bei einem einstufigen Cyclo-Getriebe der Eingriffswinkel der Verzahnung den Innenrades ungefähr $20^o$ beträgt entsprechend einer vorgegebenen Anzahl der Zähne desselben, der des Außenrades hingegen entsprechend einer Mehranzahl 1 der Zähne des betreffenden Außenrades (im Vergleich zu der Anzahl der Zähne des Innenrades) bemessen und ausgeführt wird, und die Exzentrizität des Exzenters entsprechend angepaßt wird. Damit ist bei einem Cyclo-Getriebe mit einem eine normale, d. h. eine DIN-Verzahnung aufweisenden Innenrad der Wert des Eingriffswinkels der Zähne des Außenrades an die kleinstmögliche Differenz der Anzahl der Zähne desselben und des Innenrades angepaßt, und es kann das Außenrad trotzdem beispielsweise zwei bis zehn Zähne mehr als das Innenrad haben, um etwa die Kraft-Übertragung durch das Übersetzungsverhältnis zu variieren. Vorteilhaft braucht daher, von einem zweistufigen Planetengetriebe ausgehend, die Verzahnung des ersten Innenrades nicht verändert und dasselbe nicht ausgewechselt zu werden.

Ausführungsbeispiele der Erfindung werden nachstehend anhand der Zeichnung beschrieben, wobei auf Vorteile der Erfindung hingewiesen wird.

Es zeigen .

Figur 1 ein einstufiges Cyclo-Getriebe gemäß der Erfindung;

Figur 2 ein zweistufiges rückkehrendes Planetengetriebe mit zwei
Innen- und zwei Außenrädern;

Figur 3 ein einstufiges Cyclo-Getriebe gemäß der Erfindung zur
Übertragung größerer Drehmomente.

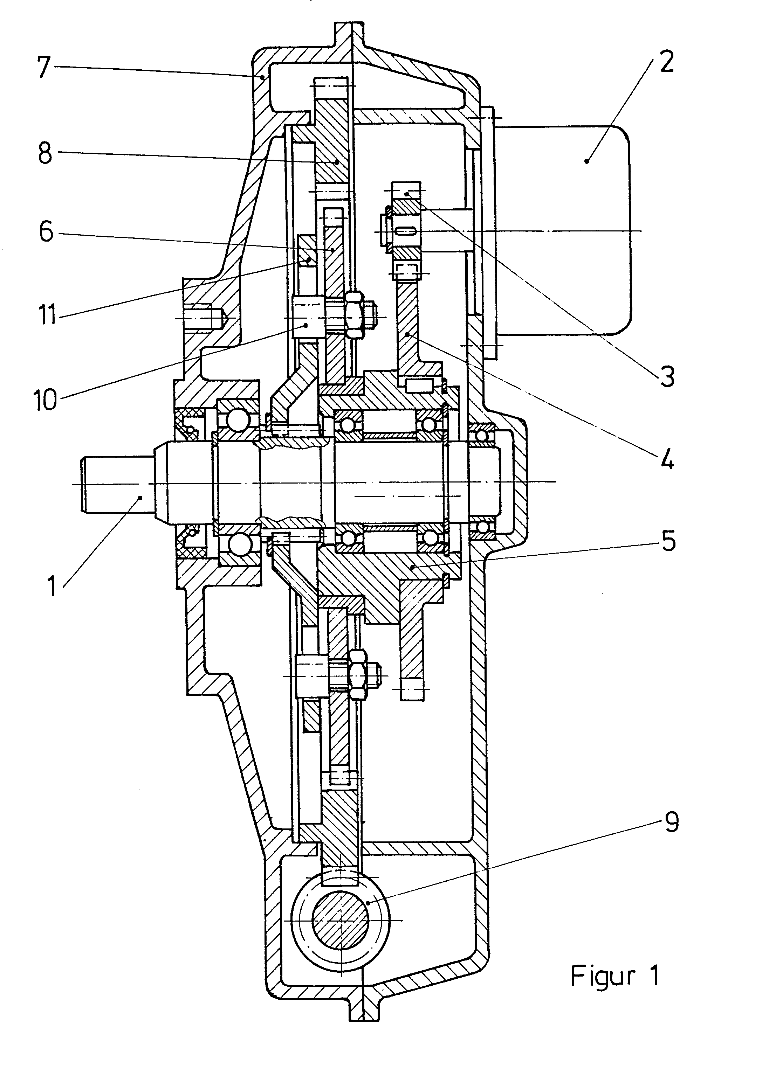

In den Figuren 1 bis 3 sind gleiche Bestandteile bzw. Elemente mit
gleichen Bezugszeichen versehen.

Beide genannten Getriebe sind Planetengetriebe, die jeweils, in Fig. 1
und 2, als integrierender Teil eines Stellantriebs dargestellt sind;

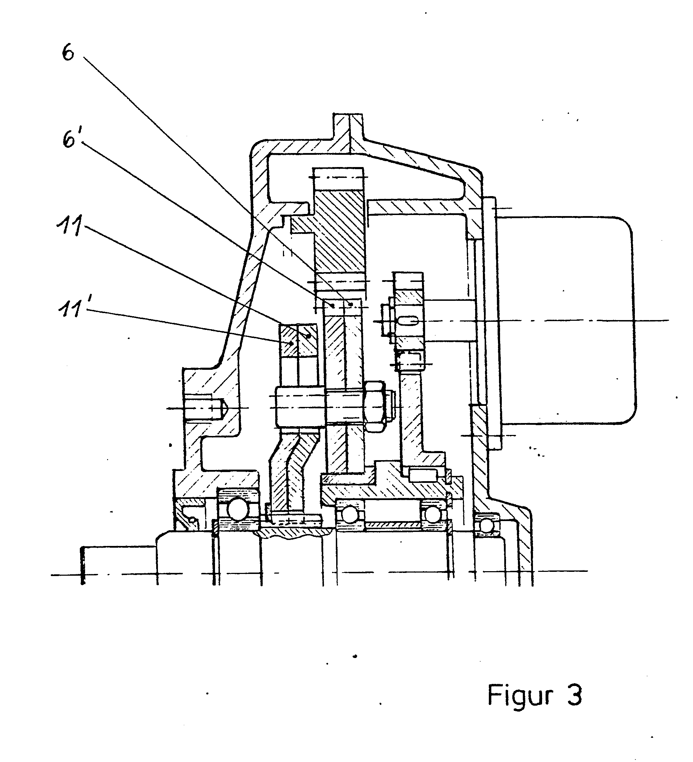

in Fig. 3 ist ungefähr eine Hälfte eines einstufigen Cyclo-Getriebes
dargestellt.

Nach Fig. 1 und 2 sind wesentliche Bestandteile eines Stellantriebs
und die Bestandteile bzw. Elemente eines Planetengetriebes in einem
gemeinsamen Gehäuse 7, im folgenden Getriebegehäuse genannt, vereint.
Ein Elektromotor 2 mit Antriebswelle treibt über zwei Vorgelegezahnräder 3, 4 einen Exzenter 5 eines Planetengetriebes. Mittels des Planetengetriebes wird das Drehmoment des Elektromotors auf die Abtriebswelle 1 des Stellantriebs übertragen. Ein Zahnrad 8 des Planetengetriebes ist in selbsthemmender Eingriffverbindung mit einer Schnecke
9, die auf einer Hilfsantriebswelle des Stellantriebs ausgebildet ist.
Die Hilfsantriebswelle kann beispielsweise mit einem Handrad verbunden sein.

Das Planetengetriebe in Fig. 1 ist erfindungsgemäß ausgestattet und
besteht aus dem motorangetriebenen Exzenter 5, ferner einem auf dem
Exzenter 5 gelagerten außenverzahnten Innenrad 6, einem innen- und
außenverzahnten Außenrad 8, welches mit der Schnecke 9 in selbsthemmender Eingriffsverbindung ist, einer Anzahl gleicher Rundbolzen 10,
die auf dem Innenrad 6 befestigt sind und auf diesem in einer Richtung hervorstehen, und aus einer auf der Abtriebswelle 1 befestigten
Lochscheibe 11 mit ebensoviel Kreislöchern wie Rundbolzen, die durch
die Kreislöcher hindurchgreifen. Die Rundbolzen 10, d. h. die Achsen
der kreisförmigen Bolzen, stehen auf einem Kreis um das Zentrum des
Innenrades 6, dem Schwerpunkt des Exzenters, und sind auf dem Kreis gleiche Bogenlängen weit voneinander beabstandet.

Die Kreislöcher der Lochscheibe 11 sind (mit ihren Mittelpunkten) gleichfalls auf einem Kreis angeordnet und haben auch einen gleichgroßen Durchmesser, der aber größer als der Durchmesser der Rundbolzen ist, und zwar ist die Differenz des Durchmessers der Kreislöcher und des Durchmessers der Rundbolzen der Exzentrizität des Exzenters angepaßt (Abstand des Schwerpunktes des Exzenters von dessen Drehachse). Der Durchmesser des Kreises, auf dem die Kreislöcher angeordnet sind, und der des Kreises, auf dem die Rundbolzen stehen, sind gleichgroß. Beide Kreise sind exzentrisch zueinander. Die Kreislöcher der Lochscheibe und damit der Kreis, auf dem sie liegen, sind so angeordnet, daß die Rundbolzen die Kreislöcher an deren Rand (Kreislochrand) berühren. Der Abstand der Mittelpunkte der beiden Kreise entspricht der Exzentrizität des Exzenters.

Bei der Drehung des Innenrades mit dem motorangetriebenen Exzenter 5 wälzen die Rundbolzen an den zylindrischen Kreislochrändern ab, so daß die Lochscheibe und die Abtriebswelle 1 im entgegengesetzten Drehsinn mit in Abhängigkeit von der Exzentrizität des Exzenters herabgesetzter Drehzahl gegenüber dem Innenrad gedreht werden. Bei dem vorstehend beschriebenen Planetengetriebe, dargestellt in Fig. 1, entspricht das Verhältnis der Drehzahlherabsetzung dem Übersetzungsverhältnis, das durch die Differenz der Anzahl der Zähne des durch Selbsthemmung blockierten Außenrades 8 und der Anzahl der Zähne des Innenrades 6 bestimmt ist, die zwischen dem blockierten Außenrad und der Abtriebswelle 1 besteht, nach der Beziehung

$$\ddot{u} = \frac{z_1}{z_2} - 1 \ .$$

Die beteiligten Planetenzahnräder 6 und 8 bilden nur _eine_ Zahnradstufe, bei der das Übersetzungsverhältnis ohne Schwierigkeit kleiner als 100 eingestellt werden kann.

Vorteilhaft ist ein Planetengetriebe nach Fig. 1 übrigens dadurch, daß nur ein Planetenzahnrad der Zahnradstufe, nämlich das Innenrad 6, im Wege des Kraftflusses zur Abtriebswelle liegt. Innenrad 6, die Rundbolzen 10 auf dem Innenrad und die Lochscheibe 11 sind die kraft- bzw. drehmomentübertragenden Bestandteile des einstufigen Planetengetriebes, das einstufiges Cyclo-Getriebe genannt wird. Die Bezeichnung Cyclo-Getriebe kennzeichnet allgemein ein Getriebesystem, bei dem als Hauptelement eine der Lochscheibe ähnliche Scheibe mit Kreislöchern, die mit Rollen auf Rundbolzen zusammenwirkt, anstelle von Zahnrädern verwendet ist. Die Bewegungen der Hauptelemente derartiger Getriebe sind rollend und daher reibungsarm. Bei dem oben "einstufiges Cyclo-Getriebe" genannten Planetengetriebe (Fig. 1) sind neben dem Innenrad 6 und dem Außenrad 8 Rundbolzen 10 und die Lochscheibe 11 verwendet, wodurch dieses Getriebe reibungsärmer ist als z. B. ein rückkehrendes Planetengetriebe, das ausschließlich aus Zahnrädern besteht.

Ein einstufiges Cyclo-Getriebe nach Fig. 1 mit einem gewünschten niederen Übersetzungsverhältnis ü, z. B. mit ü = 50, kann ohne Schwierigkeiten aus einem gegebenen Planetengetriebe mit hoher Übersetzung bekannter Art hergestellt werden, beispielsweise aus einem zweistufigen, sogenannten rückkehrenden Planetengetriebe, dargestellt in Fig. 2. Bei diesem bilden ein auf einem Exzenter 5 gelagertes außenverzahntes Innenrad 6 und ein innen- sowie auch außenverzahntes Außenrad 8, das außen mit einer im Gehäuse 7 gelagerten Schnecke 9 im Eingriff ist, eine erste Zahnradstufe. Mit dem Innenrad 6 fest verbunden ist ein kleineres, zweites Innenrad 12, das mit seiner Außenverzahnung im Eingriff ist mit einem nur innenverzahnten Außenrad 13, das außen mit einer Mitnehmerscheibe 14 verbunden ist, die selbst auf der Abtriebswelle 1 befestigt ist. Hiervon bilden das Innenrad 12 und das Außenrad 13 eine zweite Zahnradstufe, die direkt auf die Abtriebswelle wirkt. Hier sind die Zahnräder 6, 12, 13 beider Zahnradstufen und die Scheibe 14 sämtlich kraftübertragende Bestandteile des Getriebes.

Ersetzt man das Innenrad 12 durch z. B. sechs auf dem Innenrad 6 befestigte, einseitig hervorstehende Rundbolzen, die wie die Rundbolzen 10 in Fig. 1 angeordnet sind, und ferner das Außenrad 13 und die Mitnehmerscheibe 14 durch eine auf der Abtriebswelle 1 befestigte Lochscheibe mit Kreislöchern, durch welche die Rundbolzen, wie in Fig. 1 gezeigt, hindurchgreifen, bzw. wechselt man die betreffenden Bestandteile gegeneinander aus, dann ist damit ein einstufiges Cyclo-Getriebe nach Fig. 1 geschaffen mit einem verminderten Übersetzungsverhältnis, das durch die unterschiedliche Anzahl der Zähne des Innenrades 6 und des Außenrades 8, die unverändert geblieben sind, festgelegt ist. Durch Umkehrung dieser Maßnahmen kann nach Bedarf das Cyclo-Getriebe in ein zweistufiges Planetengetriebe mit hohem Übersetzungsverhältnis umgewandelt werden.

Ein Planetengetriebe und speziell ein einstufiges Cyclo-Getriebe ist für die Übertragung eines mehrfach größeren Drehmoments vom Exzenter auf die Abtriebswelle ausrüstbar, da die Anzahl der kraft- und drehmomentübertragenden Bestandteile entsprechend mehrfach, jeweils parallel miteinander auf gemeinsamer Achse angeordnet werden können. Beispielsweise ist ein sogenanntes einstufiges Cyclo-Getriebe, wie in Fig. 3 gezeigt, für die Übertragung eines zweifachen Drehmoments ausgestattet mit zwei miteinander parallel (gleichachsig) angeordneten Innenrädern 6, 6', die gemeinsam auf dem Exzenter 5 gelagert und außen mit der Innenverzahnung eines verstärkten Außenrades 8 im Eingriff sind, und mit zwei ebenfalls miteinander parallel angeordneten kongruenten Lochscheiben 11, 11', die gemeinsam auf der Abtriebswelle befestigt sind. Die Anzahl der Rundbolzen ist unverändert, jedoch sind diese entsprechend lang, da sie durch die zwei Innenräder 6, 6' hindurchgehen und an einer Hauptfläche von 6' so weit hervorstehen, daß ein jeder Rundbolzen durch zwei fluchtend hintereinanderliegende Kreislöcher der beiden Lochscheiben 11, 11' hindurchgreift.

Die Mehrfachanordnung kraftübertragender Bestandteile ist auch aus Gründen einer wirtschaftlichen Fertigung derselben von Bedeutung. So können Planetenzahnräder und Lochscheiben aus Blech gestanzt werden und nach Maßgabe der Blechstärke wie auch der zu übertragenden Drehmomente und Kräfte mehrfach, jeweils parallel miteinander einachsig angeordnet werden.

Was schließlich die Bemessung des Eingriffswinkels der Planetenzahnräder eines Getriebes nach Fig. 1 anbetrifft, so besteht, wie oben erläutert, die Möglichkeit, unter Verwendung eines Innenrades 6 mit normaler Verzahnung, d. h. mit einem der Norm DIN entsprechenden Eingriffswinkel $\beta \approx 20°$ und vorgegebener Anzahl der Zähne und mit einem Außenrad, bei dem der Eingriffswinkel $\beta'$ der Innenverzahnung

entsprechend der kleinstmöglichen Differenz 1 der Anzahl der Zähne des Außenrades 8 und des Innenrades 6 bemessen und ausgeführt ist, das Übersetzungsverhältnis zwecks Änderung der Kraftübertragung zu variieren. Zweckmäßig geschieht dies durch Variation der erwähnten Differenz der Anzahl (Mehranzahl) der Zähne. Die Variationsbreite der Mehranzahl und Differenz $z_2 - z_1$ der Zähne kann zwischen 1 und 10 liegen.

Zur Erläuterung des Vorangehenden sei hier abschließend bemerkt, daß der Eingriffswinkel und damit bekanntlich die Form der Verzahnung von dieser Mehranzahl und Differenz der Zähne abhängig ist, nämlich etwa $45^O$ bei der Mehranzahl 1 beträgt, jedenfalls mehr als $30^O$ bei kleiner Mehranzahl (2 oder 3), und etwa $20^O$ (was der Norm DIN entspricht) bei größerer Mehranzahl der Zähne beträgt.

ELEKTRO - MECHANIK GMBH
5963 Wenden

FBE 81/14
(EMG 81/4)
30.06.82

Stellantrieb mit einem Planetengetriebe

Patentansprüche

1. Stellantrieb für Ventile, Schieber oder dgl. mit einem Planetengetriebe, enthaltend ein außenverzahntes Innenrad, das durch einen über Vorlegeräder motorgetriebenen Exzenter angetrieben wird, durch den die Abtriebswelle des Stellantriebs hindurchgeht, und ein innen- und außenverzahntes Außenrad, das mit der Innenverzahnung im Eingriff ist mit der Außenverzahnung des Innenrades, und mit der Außenverzahnung mit einer im Getriebegehäuse gelagerten Schnecke im Eingriff ist und selbsthemmend festgelegt ist, d a d u r c h   g e k e n n z e i c h n e t , daß auf einem außenverzahnten Innenrad (6) eine Anzahl Rundbolzen (10) mit gleichem Durchmesser, die auf einem Kreis um das Zentrum des Innenrades stehen, gleiche Bogenlängen weit voneinander beabstandet, befestigt sind und auf diesem in einer Richtung hervorstehen, und daß auf der Abtriebswelle (1) eine Lochscheibe (11) befestigt ist, bei der in einem parallel zum Innenrad (6) ausgerichteten Scheibenteil Kreislöcher in gleicher Anzahl wie die Rundbolzen (10) und mit gleichgroßem Durchmesser, der größer als der Durchmesser der Rundbolzen ist, auf einem Kreise liegend so angeordnet sind, daß die Rundbolzen durch die Kreislöcher hindurchgreifen und den Kreislochrand berühren.

2. Stellantrieb nach Anspruch 1,

g e k e n n z e i c h n e t

durch ein einstufiges Planetengetriebe, bei dem die drehmomentübertragenden Bestandteile, nämlich das außenverzahnte Innenrad (6), das innen- und außenverzahnte Außenrad (8) und die Lochscheibe (11) jeweils zwei- oder mehrfach parallel auf gleicher Achse angeordnet sind.

3. Stellantrieb nach Anspruch 1,

g e k e n n z e i c h n e t

durch ein einstufiges Planetengetriebe, bei dem der Eingriffswinkel $(\beta)$ der Verzahnung des Innenrades (6) entsprechend einer vorgegebenen Anzahl der Zähne des Innenrades (6) ungefähr $20^o$ beträgt und der Eingriffswinkel $(\beta')$ des Außenrades (8) entsprechend einer Mehranzahl 1 der Zähne der Innenverzahnung des Außenrades (8) bemessen und ausgeführt ist, und die Exzentrizität (e) des Exzenters (5) entsprechend angepaßt ist.

0075667

7

2

8

6

11

10

1

3

4

5

9

Figur 1

0075667

Figur 2

Figur 3

# EUROPÄISCHER RECHERCHENBERICHT

**0075667**
Nummer der Anmeldung

EP 82 10 6289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | F 16 K 31/53 |
| X | US-A-2 382 482 (E.W. HENRY) <br> * Ansprüche 4-6 * | 1 | F 16 H 1/32 |
| | --- | | |
| A | FR-A-2 253 401 (APPLICATIONS MECANIQUE ET ROBINETTERIE INDUSTRIELLE) <br> * Anspruch 1 * | 1 | |
| | --- | | |
| A | AU-B- 491 915 (TOMOE TECHNICAL RESEARCH COMPANY) | | |
| | --- | | |
| A | FR-A- 679 410 (Y. CAROFF) | | |
| | --- | | |
| A | US-A-3 056 315 (A.A. MROS) | | |
| | ----- | | |

### RECHERCHIERTE SACHGEBIETE (Int. Cl. 3)

F 16 K 31/00
F 16 H 1/00

Der vorliegende Recherchenbericht wurde für alle Patentansprüche erstellt.

| Recherchenort <br> DEN HAAG | Abschlußdatum der Recherche <br> 23-12-1982 | Prüfer <br> DE SMET F.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82